# DEMANDE DE BREVET EUROPEEN

(11) **EP 0 670 553 A1**
(43) Date de publication de la demande: **06.09.1995**
(21) Numéro de dépôt: 94400452.2
(22) Date de dépôt: 03.03.1994
(51) Int. Cl.: G06F 13/16, G06F 13/28, G06F 3/06

(54) **Procédé pour le transfert entrelacé de données entre la mémoire d'un ordinateur et un équipement périphérique constitué d'un système de gestion et de plusieurs unités de stockage**

(71) Demandeur: ATON SYSTEMES S.A., F-94000 Créteil (FR)
(72) Inventeur: Ezuan, Dominique, F-94440 Marolles en Brie (FR); de Gravelaine, Rémi, F-75013 Paris (FR)

(57) **Abrégé**

L'invention concerne un système de gestion d'unités de stockage permettant de réaliser le transfert entrelacé des données entre les unités de stockage, sur lesquelles sont réparties les données, et la mémoire de l'ordinateur afin d'obtenir un taux de transfert élevé.

Il est constitué d'un processeur (1) gérant une interface unités de stockage (5) et une interface ordinateur (15). Le processeur (1) découpe les requêtes qui lui sont soumises par l'ordinateur en requêtes élémentaires réparties sur chacune des unités de stockage. Il découpe ensuite les transferts de données associés aux requêtes élémentaires en transferts élémentaires qu'il entrelace à l'initiative des unités de stockage.

Le système selon l'invention est particulièrement destiné à la gestion d'une grappe de disques pour un ordinateur performant.

## Description

La présente invention concerne un procédé pour le transfert entrelacé des données entre la mémoire d'un ordinateur et un équipement périphérique constitué d'un système de gestion et de plusieurs unités de stockage sur lesquelles sont réparties les données.

De part leur nature, les unités de stockage ne sont pas en mesure de supporter un taux de transfert de données aussi élevé que celui que peut traiter un ordinateur. La solution utilisée pour contourner cette contrainte consiste à répartir les données sur plusieurs unités. Le taux de transfert apparent est alors multiplié par un facteur croissant avec le nombre d'unités mises en jeu.

Les techniques utilisées pour transférer les données entre la mémoire d'un ordinateur et un équipement périphérique peuvent être classées en trois types bien connus à ce jour: les transferts réalisés directement par le processeur, les transferts mettant en oeuvre un dispositif de gestion des transferts, couramment appelé DMA, et les transferts en mode maître pour lesquels le système de gestion de l'équipement périphérique prend lui-même le contrôle de l'opération. Les deux derniers types sont généralement retenus car ils permettent au processeur d'exécuter d'autres tâches pendant les transferts.

Si l'on désigne par "tampon" la partie de la mémoire de l'ordinateur qui sert de source ou de destination pour un transfert de données, celui-ci est généralement désigné par son origine et sa taille. L'origine du tampon est fournie au dispositif de gestion des transferts ou au système de gestion de l'équipement périphérique qui va ensuite balayer séquentiellement le tampon au rythme imposé par les unités de stockage jusqu'à ce que la quantité de données spécifiée soit transférée. Lorsque les données sont réparties entre plusieurs unités, chaque unité réalise ses transferts de données à son propre rythme et indépendamment des autres unités. Les données sont donc transférées dans le désordre, ce qui est incompatible avec un balayage séquentiel du tampon. Pour résoudre ce problème, un tampon intermédiaire situé au niveau du système de gestion est couramment utilisé pour regrouper ou répartir les données correspondant à chaque unité. Les transferts de données sont alors réalisés en deux étapes: entre les unités de stockage et le tampon intermédiaire d'une part, entre le tampon intermédiaire et le tampon situé dans la mémoire de l'ordinateur d'autre part. Il est ainsi possible de balayer séquentiellement le tampon, mais cette opération réduit le taux de transfert des données.

Le perfectionnement apporté par cette invention consiste en un procédé permettant à un système de gestion d'unités de stockage de réaliser le transfert entrelacé des données entre les unités de stockage, sur lesquelles sont réparties les données, et la mémoire de l'ordinateur.

D'après cette invention, le procédé consiste à découper chaque requête soumise au système par l'ordinateur en requêtes élémentaires réparties sur les unités, à découper les transferts de données associés aux requêtes élémentaires en transferts élémentaires, à démarrer un transfert élémentaire à l'initiative d'une unité de stockage en déterminant l'adresse et la longueur du bloc de mémoire où commence le transfert à partir de la quantité de données déjà transférée, à terminer un transfert élémentaire à l'initiative de l'unité en déterminant la nouvelle quantité de données transférée, à déterminer l'adresse et la longueur du bloc suivant lorsque le bloc en cours de transfert est entièrement transféré, a répéter ces opérations pour chaque requête soumise par l'ordinateur jusqu'à ce que toutes les requêtes élémentaires correspondantes soient traitées.

La description de l'invention qui suit fait référence aux dessins annexés:

La figure 1 est un schéma logique du système de gestion d'unités de stockage mettant en oeuvre l'invention.

La figure 2 est un schéma logique qui détaille plus particulièrement l'interface du système avec les unités de stockage et le contrôleur associé.

La figure 3 est un schéma logique qui détaille plus particulièrement l'interface du système avec l'ordinateur et le contrôleur associé.

Les figures 4 à 6 sont des organigrammes des programmes de traitement d'un transfert suivant l'invention.

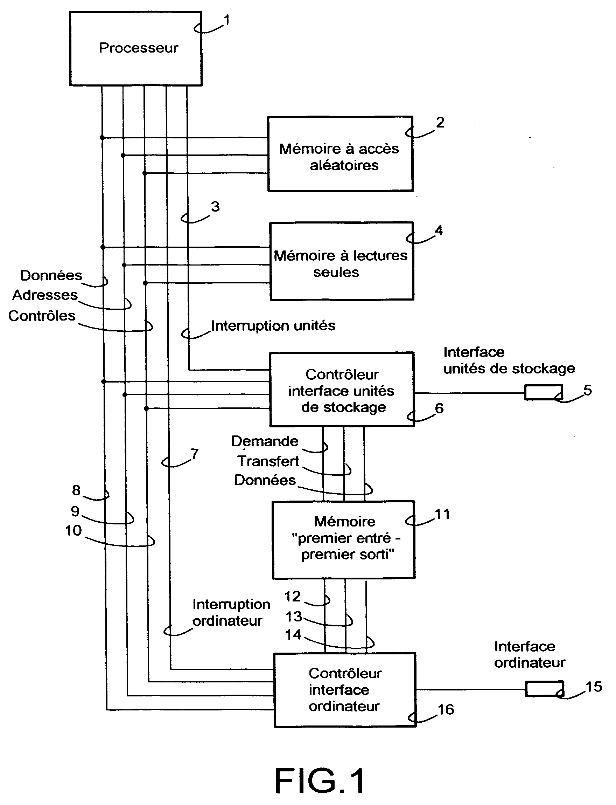

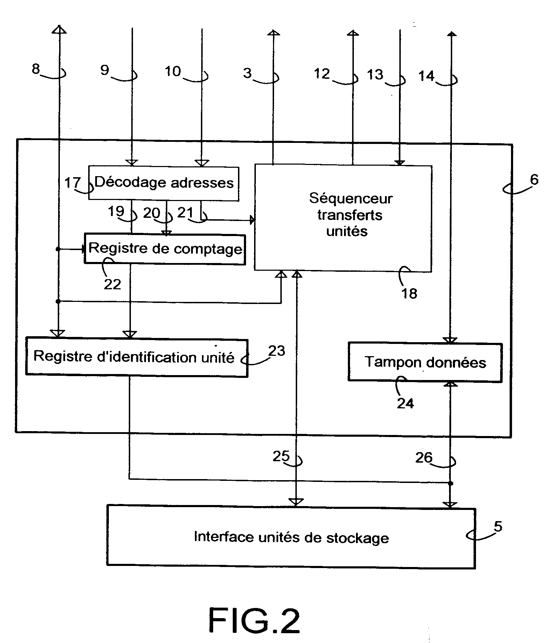

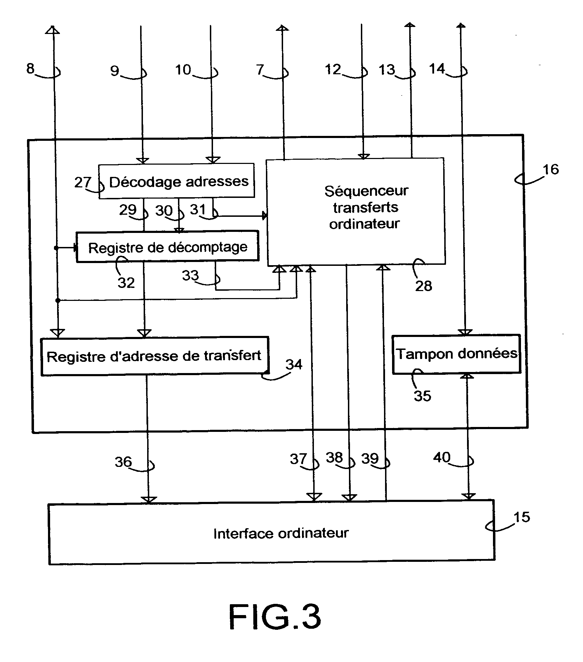

En référence aux figures 1 à 3 est donnée une description d'un système de gestion d'unités de stockage réalisant le transfert entrelacé de données entre les unités et la mémoire de l'ordinateur.

L'invention est particulièrement adaptée à un système de gestion d'unités de stockage comprenant au moins un processeur 1, une mémoire à accès aléatoires 2, une mémoire à lectures seules 4, une interface unités de stockage 5 et le contrôleur associé 6, une mémoire optionnelle de type "premier entré - premier sorti" 11, une interface ordinateur 15 et le contrôleur associé 16.

Dans le système de gestion d'unités de stockage mettant en oeuvre le procédé décrit, le processeur 1 peut être du type Intel80C186 qui fait partie de la famille des processeurs 16 bits d'INTEL et dispose de fonctions de gestion des entrées-sorties. Il accède à une mémoire à accès aléatoires 2 dont la capacité peut être de 512 kilo-octets et à une mémoire à lectures seules 4 pouvant contenir les programmes nécessaires au fonctionnement du système. L'interface unités de stockage 5, qui peut être conforme au standard ANSI X3.131, est pilotée par le contrôleur d'interface unités de stockage 6, par exemple le circuit AIC-6251 d'ADAPTEC; il permet la connexion du système aux unités de stockage; il peut demander au processeur 1 I'exécution d'un programme spécifique à travers la ligne interruption unités 3. L'interface ordinateur 15, qui peut être conforme aux spécifications EXTENDED INDUSTRY STANDARD ARCHITECTURE de BCPR SERVICES, est pilotée par le contrôleur d'interface ordinateur 16, par exemple le circuit BMIC-82355 d'INTEL; il permet la connexion du système à l'ordinateur; il peut demander au processeur 1 I'exécution d'un programme spécifique à travers la ligne interruption ordinateur 7. Le processeur 1 dialogue avec les autres circuits à travers un bus d'adresses 9, un bus de données 8 et des signaux de contrôle 10. Une mémoire de type "premier entré - premier sorti" 11, dont la taille peut être quelconque, est optionnellement placée entre le contrôleur d'interface unités de stockage 6 et le contrôleur d'interface ordinateur 16. Elle permet l'adaptation entre le débit des données de l'interface unités de stockage 5 et le débit des données de l'interface ordinateur 15. Elle se connecte au contrôleur d'interface unités de stockage 6 et au contrôleur d'interface ordinateur 16 à travers des lignes de données 14. une ligne de demande 12 et une ligne de transfert 13 propres à chaque contrôleur. Dans le cas où cette mémoire n'est pas présente, les deux contrôleurs sont directement connectés à travers des lignes de données 14, une ligne de demande 12 et une ligne de transfert 13 uniques.

Le contrôleur d'interface unités de stockage 6 comprend au moins un registre d'identification unité 23, un registre de comptage 22, un séquenceur de transferts unités 18 et un tampon de données 24. Le séquenceur de transferts unités 18 assure le fonctionnement du contrôleur et régit les interactions entre le processeur 1, l'interface unités de stockage 5 et la mémoire "premier entré - premier sorti" 11 (ou le contrôleur d'interface ordinateur 16 si la mémoire "premier entré - premier sorti" 11 n'est pas utilisée). Le processeur 1 accède aux différents constituants du contrôleur d'interface unités de stockage 16 à travers le bus d'adresses 9, le bus de données 8, les signaux de contrôle 10 et le décodage d'adresses 17 qui pilote la ligne de sélection du registre d'identification unité 19, la ligne de sélection du registre de comptage 20 et la ligne de sélection du séquenceur 21. La ligne interruption unités 3 est prise en charge par le séquenceur de transferts unités 18. La liaison vers l'interface unités est réalisée à travers un bus de données unités 26 issu du tampon de données 24 et un bus de contrôle unités 25 issu du séquenceur transferts unités 18.

Le contrôleur d'interface ordinateur 16 comprend au moins un registre d'adresse de transfert 34, un registre de décomptage 32, un séquenceur de transferts ordinateur 28 et un tampon de données 35. Le séquenceur de transferts ordinateur 28 assure le fonctionnement du contrôleur et régit les interactions entre le processeur 1, l'interface ordinateur 15 et la mémoire "premier entré - premier sorti" 11 (ou le contrôleur d'interface unités de stockage 6 si la mémoire "premier entré - premier sorti" 11 n'est pas utilisée). Le registre de décomptage 32 peut signaler une fin de comptage au séquenceur de transferts ordinateur 28 à travers la ligne fin de comptage 33. Le processeur 1 accède aux différents constituants du contrôleur d'interface ordinateur 16 à travers le bus d'adresses 9, le bus de données 8, les signaux de contrôle 10 et le décodage d'adresses 27 qui pilote la ligne de sélection du registre d'adresse de transfert 29, la ligne de sélection du registre de décomptage 30 et la ligne de sélection du séquenceur 31. La ligne interruption ordinateur 7 est prise en charge par le séquenceur de transferts ordinateur 28. La liaison vers l'interface ordinateur est réalisée à travers un bus d'adresses ordinateur 36 issu du registre d'adresse de transfert 34, un bus de données ordinateur 40 issu du tampon de données 35, un bus de contrôle ordinateur 37, une ligne de demande d'accès ordinateur 38 et une ligne d'autorisation d'accès ordinateur 39, ces trois derniers éléments étant issus du séquenceur de transferts ordinateur 28.

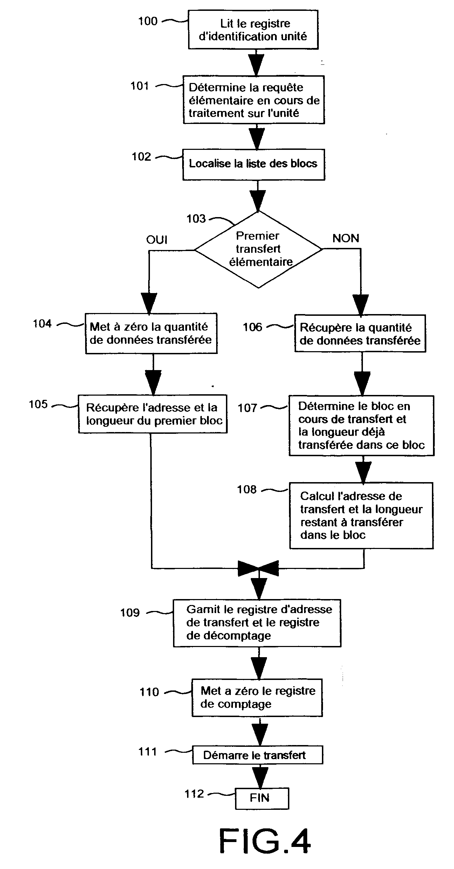

En référence aux figures 4 à 6, en relation avec les programmes en langage d'assemblage stockés sous forme binaire dans la mémoire à lectures seules 4, est donnée une description du procédé suivant l'invention permettant au système de gestion d'unités de stockage de réaliser le transfert entrelacé de données entre les unités et la mémoire de l'ordinateur.

Bien que dans cette description les programmes soient considérés comme stockés dans la mémoire à lectures seules 4, ils peuvent, de façon équivalente, être stockés dans la mémoire à accès aléatoires 2.

Lorsque, par un moyen approprié, l'ordinateur soumet, pour traitement, une requête au système de gestion d'unités de stockage, celle-ci est analysée par le processeur 1 et découpée en une ou plusieurs requêtes élémentaires réparties sur les unités de stockage. Celles-ci sont mémorisées dans la mémoire à accès aléatoires 2 et soumises aux unités de stockage à travers le contrôleur d'interface unités de stockage 6 et l'interface unités de stockage 5. A chaque unité de stockage est associée, dans la mémoire à accès aléatoires 2 une liste de requête élémentaires en attente ou en cours de traitement. Diverses opérations de tri et de regroupement des requêtes élémentaires relatives à une unité de stockage peuvent être effectuées à ce niveau. Dès qu'une unité de stockage est en mesure de traiter une nouvelle requête élémentaire, une requête élémentaire en attente lui est soumise pour traitement.

A chaque requête élémentaire peut correspondre un transfert de données entre l'unité de stockage et un ou plusieurs sous-ensembles du tampon dans la mémoire de l'ordinateur. Si l'on désigne par "bloc" un sous-ensemble du tampon, celui-ci peut être décrit par son adresse de début et sa longueur. Le processeur 1 élabore pour chaque requête élémentaire une liste de descriptions de bloc spécifiant le transfert de données associé et la range dans la mémoire à accès aléatoires 2.

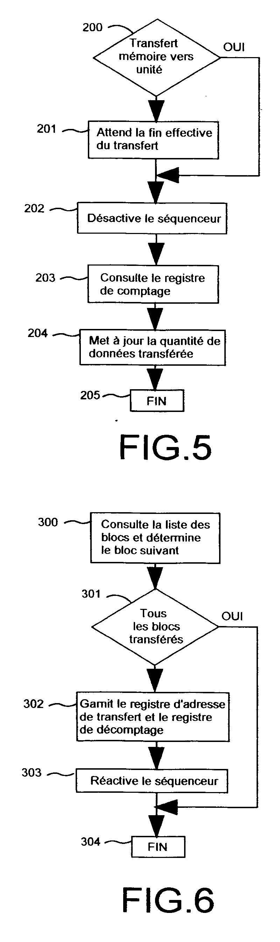

Un transfert de données associé à une requête élémentaire n'est pas nécessairement effectué en une seule fois. En effet l'unité de stockage le découpe en transferts élémentaires en fonction de ses besoins propres. Les unités de stockage se partagent l'interface unités de stockage 6 en réalisant des transferts élémentaires chacune à leur tour La réalisation d'un transfert élémentaires met en oeuvre les trois opérations suivantes:
(1) Le démarrage d'un transfert élémentaire s'effectue à l'initiative d'une unité de stockage lors du traitement d'une requête élémentaire qui lui a été soumise. A travers l'interface unité de stockage 5 elle signale au contrôleur associé 6 son intention de réaliser un transfert élémentaire. Celui-ci demande alors, à travers la ligne interruption unités 3, I'exécution par le processeur 1 du programme dont l'organigramme est représenté à la figure 4. Au pas 100 le registre d'identification d'unité 23 est lu afin de déterminer, au pas 101, la requête élémentaire en cours d'exécution par l'unité de stockage qui demande le transfert élémentaire. Au pas 102 la liste de descriptions de bloc associée à la requête élémentaire est localisée dans la mémoire à accès aléatoires 2. Au pas 103 un test est effectué pour déterminer si il s'agit du premier transfert élémentaire; si oui, la quantité de données transférée pour cette requête est mise à zéro au pas 104, l'adresse et la longueur du premier bloc sont récupérés au pas 105 et deviennent l'adresse de transfert et la longueur de transfert, I'exécution continue au pas 109; si ce n'est pas le premier transfert élémentaire, la quantité de données transférée pour cette requête élémentaire est récupérée au pas 106 pour déterminer, au pas 107, le bloc en cours de transfert et la longueur déjà transférée dans ce bloc. Pour ce faire, la liste de descriptions de bloc associée à la requête élémentaire est parcourue en soustrayant à la quantité récupérée au pas 106 la longueur de chaque bloc tant que cette soustraction n'entraîne pas un résultat négatif. La dernière description de bloc consultée correspond au bloc en cours de transfert et le résultat des soustractions successives est la longueur déjà transférée dans ce bloc. Au pas 108 sont calculées l'adresse de transfert en additionnant la longueur déjà transférée dans le bloc à l'adresse du bloc et la longueur de transfert en soustrayant la longueur déjà transférée dans le bloc à la longueur du bloc. Au pas 109 le registre d'adresse de transfert 34 et le registre de décomptage 32 du contrôleur d'interface ordinateur 16 sont garnis respectivement avec l'adresse de transfert et la longueur de transfert. Au pas 110 le registre de comptage 22 du contrôleur d'interface unités de stockage 6 est mis a zéro. Le transfert élémentaire est démarré au pas 111 par l'envoi d'un ordre au séquenceur de transferts ordinateur 28. L'exécution de ce programme s'achève au pas 112. Une fois un transfert élémentaire démarré aucune autre unité de stockage ne peut demander l'exécution d'un autre transfert élémentaire puisque l'interface unité de stockage 5 est occupée.
(2) La terminaison d'un transfert élémentaire s'effectue à l'initiative de l'unité de stockage pour libérer l'interface unité de stockage 5. L'unité signale son intention de terminer un transfert élémentaire au contrôleur d'interface unités de stockage 6 à travers l'interface associée 5. Celui-ci demande alors, à travers la ligne interruption unités 3, I'exécution par le processeur 1 du programme dont l'organigramme est représenté à la figure 5. Au pas 200 un test est effectué pour déterminer le sens du transfert des données; si le transfert a lieu de la mémoire de l'ordinateur vers l'unité de stockage, I'exécution continue au pas 202; si le transfert a lieu de l'unité vers la mémoire, le séquenceur de transferts ordinateur 28 est consulté, au pas 201, pour attendre la fin effective du transfert élémentaire en cours. En effet il peut rester des données en provenance de l'unité dans le tampon de données 24, la mémoire "premier entré - premier sorti" 11 et le tampon de données 35. Au pas 202 un ordre est envoyé au séquenceur de transfert ordinateur 28 pour le désactiver. Au pas 203 le registre de comptage 22 est consulté pour déterminer la quantité de données effectivement transférée durant le transfert élémentaire et ajouter, au pas 204, cette quantité à la quantité de données transférée pour la requête élémentaire correspondante. L'exécution de ce programme s'achève au pas 205.
(3) Lorsque, lors d'un transfert élémentaire, la quantité de données correspondant à la longueur spécifiée dans le registre de décomptage 32 est transférée, la ligne de fin de comptage 33 désactive le séquenceur de transferts ordinateur 28. Celui-ci demande alors, à travers la ligne interruption ordinateur 7, I'exécution par le processeur 1 du programme dont l'organigramme est représenté à la figure 6. Au pas 300 la liste de descriptions de bloc associée à la requête élémentaire correspondant au transfert élémentaire en cours est consultée pour déterminer le bloc qui suit le bloc qui vient d'être transféré. Au pas 301 un test est effectué pour déterminer si tous les blocs ont été transférés; si c'est le cas l'exécution de ce programme s'achève immédiatement au pas 304. Au pas 302 le registre d'adresse de transfert 34 et le registre de décomptage 32 du contrôleur d'interface ordinateur 16 sont garnis respectivement avec l'adresse et la longueur du nouveau bloc. Au pas 303 un ordre est envoyé au séquenceur de transferts ordinateur 28 pour le réactiver et poursuivre le transfert élémentaire en cours. L'exécution de ce programme s'achève au pas 304.

Ces opérations se répètent à l'initiative des unités tant que celles-ci ont des transferts de données à effectuer. Bien qu'il ne peut y avoir qu'un seul transfert élémentaire à un instant donné, plusieurs unités peuvent effectuer des transferts de données simultanément. Ceux-ci s'entrelacent au niveau des transferts élémentaires.

Une unité de stockage signale la fin du traitement d'une requête élémentaire au contrôleur d'interface unités de stockage 6 à travers l'interface associée 5. Celui-ci avertit le processeur 1 à travers la ligne interruption unités 3. Lorsque toutes les requêtes élémentaires associées à une même requête sont entièrement traitées, l'ordinateur est averti, par un moyen approprié, de la fin du traitement de cette requête.

## Revendications

1. Un procédé pour le transfert entrelacé des données entre la mémoire d'un ordinateur et un équipement périphérique constitué d'un système de gestion et de plusieurs unités de stockage sur lesquelles sont réparties les données, caractérisé en ce qu'il comprend des étapes consistant à découper les requêtes soumises audit système par ledit ordinateur en requêtes élémentaires réparties sur lesdites unités, à découper les transferts de données associés auxdites requêtes élémentaires en transferts élémentaires, ledit procédé comprenant en outre les opérations:
de démarrage d'un transfert élémentaire à l'initiative d'une unité de stockage en déterminant l'adresse et la longueur du bloc de mémoire où commence le transfert à partir de la quantité de données déjà transférée,
de terminaison dudit transfert élémentaire à l'initiative de ladite unité en déterminant la nouvelle quantité de données transférée,
de détermination de l'adresse et la longueur du bloc suivant lorsque le bloc en cours de transfert est entièrement transféré,
de répétition de ces opérations pour chaque requête soumise auxdit système par ledit ordinateur jusqu'à ce que toutes les requêtes élémentaires correspondantes soient traitées.

2. Le procédé selon la revendication 1 comprenant en outre une étape de tri et de regroupement des requêtes élémentaires relatives à une unité de stockage.

3. Un système de gestion d'unités de stockage comprenant un processeur (1), une mémoire à accès aléatoires (2), une mémoire à lectures seules (4), un contrôleur d'interface unités de stockage (6) pour la connexion du système à des unités de stockage, un contrôleur d'interface ordinateur (16) pour la connexion à un ordinateur, permettant le transfert entrelacé des données entre lesdites unités de stockage, sur lesquelles sont réparties les données, et la mémoire dudit ordinateur,
ledit système étant caractérisé en ce qu'il découpe les requêtes qui lui sont soumises par l'ordinateur en requêtes élémentaires réparties sur chacune des dites unités de stockage, découpe les transferts de données associés auxdites requêtes élémentaires en transferts élémentaires et entrelace lesdits transferts élémentaires à l'initiative desdites unités de stockage.

4. Le système suivant la revendication 3 comprenant en outre une mémoire de type "premier entré - premier sorti" (11) servant à adapter le débit des données dudit interface unités de stockage (5) avec le débit des données dudit interface ordinateur (6).

5. Le système suivant la revendication 3 ou 4 étant en outre caractérisé en ce qu'il trie et regroupe lesdites requêtes élémentaires relatives à chacune desdites unités de stockage.
